Europäisches Patentamt

European Patent Office

Office européen des brevets

(11) Publication number: **0 154 227**
**B1**

(12) **EUROPEAN PATENT SPECIFICATION**

(45) Date of publication of patent specification: **02.11.89**

(21) Application number: **85101640.2**

(22) Date of filing: **14.02.85**

(51) Int. Cl.⁴: **B 25 J 15/00**

(54) **Exchange system and method for connecting, and/or exchanging remote elements to a central control source.**

(30) Priority: **09.03.84 US 588080**

(43) Date of publication of application:
**11.09.85 Bulletin 85/37**

(45) Publication of the grant of the patent:
**02.11.89 Bulletin 89/44**

(84) Designated Contracting States:
**CH DE FR GB IT LI**

(56) References cited:
**EP-A-0 036 912**
**EP-A-0 088 559**
**EP-A-0 092 967**
**EP-A-0 120 275**
**DE-A-3 310 070**
**DE-A-3 310 192**

(73) Proprietor: **APPLIED ROBOTICS, INC.**
**18 Avis Drive**
**Latham New York 12110 (US)**

(72) Inventor: **Newell, Bruce D.**
**778 Trottingham Drive**
**Schenectady New York 12309 (US)**
Inventor: **Petronis, Thomas J.**
**63 Southbury Road**
**Clifton Park New York 12065 (US)**
Inventor: **Krause, Lawrence R.**
**970 Gloucester Place**
**Niskayuna New York 12309 (US)**

(74) Representative: **Kehl, Günther, Dipl.-Phys. et al**
**Patentanwälte Hagemann & Kehl Ismaninger**
**Strasse 108 Postfach 86 03 29**
**D-8000 München 86 (DE)**

## Description

### Background of the Invention

This invention relates to an exchange system and method for connecting a remote manipulable element to a central control source. More particularly, this invention is directed to an exchange unit and method capable of effecting automatic connection between a robot arm and a desired tool gripper selected from an array of tool grippers.

Robot arms and tool grippers are well known in the art. However, prior art systems and methods suffer from the shortcoming that either the tool gripper is fixedly attached to the robot arm, as by screws, or that each tool gripper is a set, although connectable to and separable from the robot arm, requires its own separate connections for control distinct from that of the robot arm, with the result that there is a cumbersome and messy duplication of control input conduits.

European Publication 0092967 is exemplary of a robot hand changer having a changer unit fixedly mounted on an industrial robot and includes a changer adapter, fitted with a robot hand, detachably fitted in the changer unit. In the arrangement of this publication, clamping balls clamp the changer adapter to the changer unit when the clamping balls are pressed against a conical surface of the changer adapter, which conical surface is shaped to match a conical surface formed in the changer unit. When the clamping balls are pressed against the conical surface of the changer adapter, the conical surface of the changer unit and the conical surface of the changer adapter are engaged close together to effectively join the changer unit and the changer adapter. Precisely machined conical surfaces and use of clamping balls add significantly to the cost of the robot hand changer.

The invention avoids need for precision parts and locking balls and makes possible selection of a tool gripper without the need for a separate set of control conduits between each gripper and a central control source.

### Summary of the Invention

With the foregoing in mind we provide in accordance with the invention an exchange system for connecting a remote manipulable element to a central control source and comprising a first exchange unit attachable to and in control signal communication with the central control source, the first exchange unit being provided with control signal conducting means; a second exchange unit matable with and releasably connectable to the first exchange unit and attachable to and in control signal communication with the remote manipulable element; alignment means comprising at least one alignment pin on one of the exchange units and at least one alignment hole in the other of the exchange units for facilitating initial alignment of said first and second exchange units; and locking means in signal communication with and responsive to the central control source for connecting and disconnecting the matable exchange units, characterized in that one of said exchange units is provided with male electrical connections for mating with corresponding female electrical connections in the other of said exchange units after attaining said initial alignment of said at least one alignment pin with said at least one alignment hole, at least one of said electrical connections being spring loaded, said male electrical connection being positively mated with said corresponding female electrical connection, after said initial alignment, under action of said locking means incident to said mating connection of said one and said another exchange unit by said locking means.

Where the remote manipulable element is a tool gripper, the exchange system of this invention acts to connect a robot arm with any one of a plurality of tool grippers without the need for separate control input umbilicals to the gripper. The invention further provides the capability of automatically exchanging a selected tool gripper for any other gripper in a given array. Thus, when the first and second exchange units are mated they enable communication of tool gripper control signals through the mated exchange units so that a selected tool gripper may be controlled without the need for a separate set of control conduits between each gripper and the control signal source.

Advantages of the exchange system of the invention are:

(a) a robot arm can automatically mate with a series of selected tool grippers and thus perform operations requiring different tools;

(b) it is lightweight thereby consuming a minimum amount of the available robot arm working capacity;

(c) it eliminates the need for duplicate control umbilicals between each tool gripper and the control signal source; and

(d) it is low cost and eliminates need for precision machine parts.

Objects and advantages of the invention may be seen in the following description taken in conjunction with the drawings.

### Brief Description of the Drawings

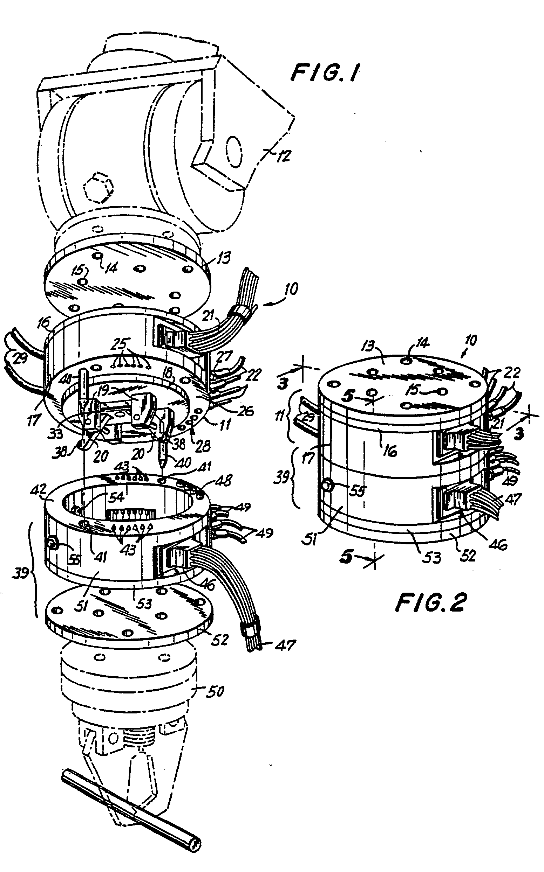

Fig. 1 is an exploded, three-dimensional view of the elements of the tool gripper exchange unit.

Fig. 2 is a view of the mated upper and lower exchange units.

Fig. 3 is a sectional view of the exchange units taken along line 3-3 of Fig. 2 and further showing partial mating of the units.

Fig. 4 is a sectional view of the mated exchange units taken along line 4-4 of Fig. 3.

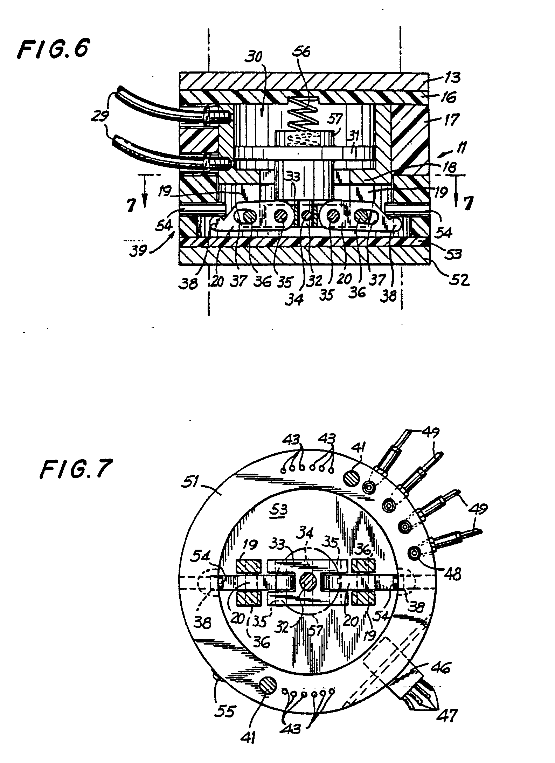

Fig. 5 is a partial sectional view taken along line 5-5 of Fig. 2 showing annular recesses in the exchange units.

Fig. 6 is a sectional view similar to Fig. 3 and showing the exchange units locked together.

Fig. 7 is a sectional view taken along line 7-7 of Fig 6.

## Detailed Description of the Preferred Embodiment

The exploded view of the tool exchange system 10 shows its major components. An upper exchange unit 11 is attached to a robot arm 12 by means of an adapter plate 13. The adapter plate 13 is of the same diameter as the upper exchange unit 11 and has threaded holes 14 for attachment to upper exchange unit 11 by means of screws. Countersunk holes 15 are located on the adapter plate 13 as required for attachment of the adapter plate to a particular robot arm. As robot arms of various manufacturers have varying screw hole locations for tool attachment, holes 15 are varied for each different manufacture. Adapter plate 13 is preferably made of lightweight metal to provide for secure threading of the screw holes while minimizing weight.

The body of upper exchange unit 11 includes a top plate 16, a cylindrical housing 17 and bottom plate 18. Mounts 19 for lifting fingers 20 are attached to and project downwardly from bottom plate 18. Upper exchange unit housing 17 is preferably formed of lightweight plastic and has receptacles for receiving input control signals, here depicted as a plurality of electrical wires 21 and pneumatic hoses 22 from a remote control source (not shown). The plastic body of housing 17 provides electrical insulation between the electrical connector elements 25. If desired, housing 17 could be formed of lightweight metal or other such non-insulative material. Such construction would require insulating sheaths around connector elements 25.

Internally, upper exchange unit housing 17 has an annular recess 23 for passage of electrical control conduits 24 to desired locations about its circumference where they join vertical female connector elements 25 for passage to the face 26 of the housing. Pneumatic input control ports 27 intersect vertical bored conduits 28 in the wall of upper exchange unit housing 17 for communication with housing face 26. Additional inputs 29 communicate with the coupling drive unit 30. In the preferred embodiment shown, coupling drive unit 30 is a double acting pneumatic cylinder having a pneumatic input directed to each respective face of piston 31.

If desired, a compression spring 56 may be mounted between the top of piston rod 57 and the lower face of plate 16 to provide fail-safe mating of the exchange units in the event of a loss of air pressure to pneumatic inputs 29. The initial force of the spring 56 should be selected to be great enough to hold piston 31 in its fully downward position without the maintenance of air pressure on pneumatic cylinder 30, while the compressed force should be not so great as to substantially inhibit retraction of piston 31 by air pressure delivered to cylinder 30 in normal operation. Alternatively, pneumatic inputs 20 may be provided with spring return blocking ports to maintain air pressure on cylinder 30 if the source of air pressure fails.

Output shaft 32 of pneumatic cylinder 30 passes through a hole in bottom plate 18 and has attached to it a yoke 33 by means of pivot pin 34. At each end of yoke 33 is mounted a lifting finger 20 by means of pivot pin 35. Lifting finger 20 is further connected to mount 19 by slide pin 36 which passes through elongated slot 37 in finger 20, so that a portion of tle downward stroke of piston 31 and output shaft 32 is translated into lateral movement of hook 38 at the lower end of finger 20 during mating of upper exchange unit 11 with lower exchange unit 39.

Upper exchange unit 11 also has bullet-nosed guide pins 40 projecting downwardly from its face 26 for general registry with alignment holes 41 in the face 42 of lower exchange unit 39 during mating. Guide pins 40 preferably extend farther from face 26 of upper exchange unit 11 than any other element to avoid damage to other elements of the upper or lower unit in the event of misalignment.

Lower exchange unit 39 is preferably formed of the same materials as upper exchange unit 11 and has about the circumference of its upper face 42 spring-loaded male control connections 43 for mating with the corresponding female connections 25 on the face of upper exchange unit 11. Lower exchange unit 39 includes housing 51, adapter plate 52 for attaching the unit to a tool gripper 50, and bottom plate 53. Like upper exchange unit housing 17, lower exchange unit housing 51 is preferably formed of plastic and so provides electrical insulation between electrical connector elements 43. If housing 51 is formed of non-insulative material, connector elements 43 would require insulating sheaths.

Internally, lower exchange unit 39 has an annular recess 44 corresponding to upper exchange unit recess 23 for passage of electrical control conduits 45 from male connectors 43 to output plug 46 for further connection through electrical wires 47 to the tool gripper 50. Similarly, lower exchange unit 39 has bored conduits passing vertically through its wall to connect male pneumatic connectors 48 with pneumatic control output conduits 49 for passing pneumatic signals to tool gripper 50. Male connectors 48 preferably have an "0" ring seal, while female connectors 28 on upper exchange unit 11 are slightly chamfered, thus providing a secure, leak free pneumatic connection upon mating of the units.

Male connectors rather than female are preferably located on the face 42 of lower exchange unit 39 to avoid collection of dust, dirt or other foreign matter which could readily occur on upwardly facing female connectors during storage. Alignment hole 41 is preferably on lower exchange unit 39 to facilitate visual alignment of that hole with guide pin 40 by an operator during initial set-up of the system, and may be bored completely through the lower exchange unit housing 51 and adapter plate 52 to avoid collection of foreign matter.

Lower exchange unit 39 also has locking pins 54 mounted in its wall and extending radially inwardly. Locking pins 54 are located so as to align with hooks 38 at the outer ends of lifting fingers 20 during mating. These pins are preferably made of hardened steel or similar material.

Bottom plate 53 of lower exchange unit 39 is preferably formed of lightweight metal and attaches to lower adapter plate 52. Lower adapter plate 52 is bored similarly to upper adapter plate 13 for attachment of lower exchange unit 39 to a tool gripper 50.

The spring-loaded male electrical connectors 43 preferably extend upwardly about .06 to .08 inch beyond the upper face 42 of the lower exchange unit 39. Two of these connectors are preferably connected through their respective female connectors 25 to an input current and a ground and are wired in parallel to the terminals of coupling position indicator 55, which is preferably a low power LED display.

In operation of the tool gripper exchange system, each tool gripper 50 of an array of grippers has an associated lower exchange unit 39 connected to it by lower adapter plate 52 and control signal umbilicals 47 and 49. The tool grippers are preferably stored in an appropriate rack in a convenient orientation, usually vertically, for pick up by the robot arm 12 and associated upper exchange unit 11. Thus, for example, an array of four tool grippers for performing four different operations would normally utilize four lower exchange units matable seriatim with one upper exchange unit.

One upper exchange unit 11 is attached to the robot arm by adapter plate 13, and its associated control signal umbilicals 21 and 22 are connected to a remote signal source (not shown), which may or may not be an integral part of the robot arm 12. During set-up of the system, an operator manipulates the robot arm 12 to locate the upper exchange unit 11 above the desired tool gripper and its associated lower exchange unit 39 stored in an appropriate rack, aligning bullet-nosed pins 40 with alignment holes 41. He then moves the upper exchange unit toward the lower exchange unit. As the units almost touch, the male electrical connectors 43 protruding beyond the upper face 42 of the lower exchange unit 39 contact their respective female connectors 25, thus energizing the coupling position indicator 55. At this point, the operator stops robot arm movement of the upper exchange unit and signals pneumatic input 29 to pressurize the drive cylinder 30, driving lifting fingers 20 downward and outward to engage locking pins 54. Although robot arm movement has stopped, drive cylinder 30 continues to drive output shaft 32 causing lifting fingers 20 to lift upward on pins 54, pulling the lower exchange unit 39 into secure connection with the upper exchange unit 11 without any harsh striking between the faces of the exchange units. Because the yoke 33 holding lifting fingers 20 is pivotally mounted on piston output 32, lifting forces tend to equalize on pins 54.

Once this mating operation has been programmed into the central control source by the operator during set-up of the system, it thereafter may be carried out automatically on programmed signals from the central control source. The sequence of events described above for mating of the units remains the same, the only difference being that there is no requirement for manual input by the operator.

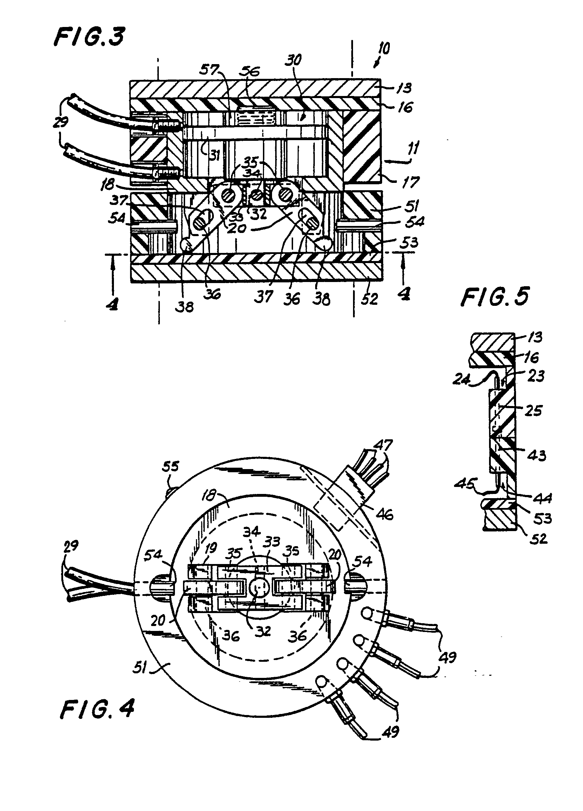

When a particulate tool gripper is to be released, it is positioned in an appropriate rack and a pneumatic signal is delivered against the lower face of drive piston 31 of cylinder 30, retracting output shaft 32 and so also retracting lifting fingers 20. Additionally, the lower surfaces of fingers 20 interfere slightly with bottom plate 53 of lower exchange unit 39 (Fig. 3) and this interference assists in urging the exchange units apart.

Once intitial set-up for mating and disengaging of each tool gripper in the array is accomplished, those functions may be controlled automatically by an appropriate programmed control source.

**Claims**

1. An exchange system for connecting a remote manipulable element to a central control source and comprising a first exchange unit (11) attachable to and in control signal communication with the central control source, the first exchange unit being provided with control signal conducting means (25); a second exchange unit (39) matable with and releasably connectable to the first exchange unit and attachable to and in control signal communication with the remote manipulable element (50); alignment means comprising at least one alignment pin (40) on one of the exchange units and at least one alignment hole (41) in the other of the exchange units for facilitating initial alignment of said first and second exchange units; and locking means (19, 20, 32-35) in signal communication with and responsive to the central control source for connecting and disconnecting the matable exchange units, characterized in that one of said exchange units (39) is provided with male electrical connections (43) for mating with corresponding female electrical connections (25) in the other of said exchange units (11) after attaining said initial alignment of said at least one alignment pin (40) with said at least one alignment hole (41), at least one of said electrical connections being spring loaded, said male electrical connection (43) being positively mated with said corresponding female electrical connection (25), after said initial alignment, under action of said locking means incident to said mating connection of said one and said another exchange unit by said locking means (19, 20, 32-35, 54).

2. The exchange system of claim 1, characterized in that said locking means comprises latch means having cooperating parts, one of which is mounted in said one of said exchange units for compound axial and radial movement and the other part fixed in said other exchange unit for engagement by said one of said cooperating parts.

3. The exchange system of claim 1, characterized in that the locking means comprises a plurality of reciprocable latch means (20) operated by drive means (30, 32) comprising a double pneumatic cylinder (30) and an output shaft (32) and engageable with latch retaining means (54) in response to signals from the central control source, said reciprocable latch means being reciprocably mounted on a yoke (33) which is pivotally mounted on the piston output shaft to engage the latch retaining means (54) prior to full mating of the first exchange unit with the second exchange unit, said latch means for full mating of the first exchange unit with the second exchange unit lifting the second exchange unit into secure full mating contact with the first exchange unit, the arrangement being such that the pivotal mounting of the yoke on the piston output shaft serves to equalize lifting forces exerted on the latch retaining means (54) by the latch means (20) during mating of the first and second exchange system.

4. The exchange system of any of the preceding claims, characterized in that said male electrical connections and said corresponding female electrical connections at least one of which being spring loaded have long axes aligned upon mating of the first and second exchange units.

5. The exchange system of claim 4, characterized in that the drive means comprises a double-pneumatic cylinder (30) and piston output shaft (32).

6. The exchange system of claim 5, characterized in that the latch means are reciprocably mounted on a yoke (33) which is pivotally mounted (34) to the piston output shaft, which pivotal mounting serves to equalize lifting forces exerted on the latch retaining means (54) by the latch means (20) during mating of the first and second exchange units.

7. In a manipulator tool exchange unit system comprising matable first and second exchange units having matable control signal conducting means mounted in each exchange unit, characterized by said control signal conducting means (25, 43) having long axes aligned upon mating of the exchange units (11, 39) and by at least one of the mating conducting means being an axially reciprocable spring-loaded electrical conducting contact element.

8. A system according to claim 7, characterized in that for enabling tool interchange said first exchange unit is in control signal communication with a central control source and said second exchange unit is attachable to and in control signal communication with a manipulable element comprising a tool gripper, and locking means (19, 10, 32-35) in signal communication with and responsive to the central control source for connecting and disconnecting the matable exchange units.

9. The exchange system according to claim 8, characterized in that the locking means comprises a plurality of reciprocable latch means (20) operated by drive means (30, 32) and engageable with latch retaining means (54), the drive means being responsive to signals (29) from the central control source to engage and disengage, on command, the matable exchange units.

10. The exchange system of claim 9, characterized in that the reciprocable latch means reciprocate in response to the drive means to engage the latch retaining means (54) prior to full mating of the first exchange unit with the second exchange unit and upon further reciprocation, to lift the second exchange unit into secure full mating contact with the first exchange unit.

11. The exchange system of claim 10, characterized in that the drive means comprises a double-pneumatic cylinder (30) and piston output shaft (32).

12. The exchange system of claim 11, characterized in that the latch means are reciprocably mounted on a yoke (33) which is pivotally mounted (34) to the piston output shaft, which pivotal mounting serves to equalize lifting forces exerted on the latch retaining means (54) by the latch means (20) during mating of the first and second exchange units.

**Patentansprüche**

1. Wechselsystem zur Verbindung eines Fernbedienungselements mit einer zentralen Kontrollquelle, mit einer ersten Wechseleinheit (11), die mit der zentralen Kontrollquelle verbindbar ist und in Steuersignalverbindung mit dieser steht, welche erste Wechseleinheit mit Steuersignalleitmitteln (25) versehen ist; mit einer zweiten Wechseleinheit (39), die zu der ersten Wechseleinheit paßt, lösbar mit dieser verbindbar ist und in Steuersignalverbindung mit dem Fernbedienungselement (50) steht; mit Ausrichtmitteln, die mindestens einen Ausrichtstift (40) auf einer der Wechseleinheiten und mindestens ein Ausrichtloch (41) in der anderen Wechseleinheit zur Erleichterung der Anfangsausrichtung der ersten und zweiten Wechseleinheit aufweisen; und mit Verschlußmittel (19, 20, 32-35), die in Signalverbindung mit der zentralen Kontrollquelle stehen und auf diese ansprechen, um die passenden Wechseleinheiten zu verbinden oder zu lösen, dadurch gekennzeichnet, daß eine der Wechseleinheiten (39) mit männlichen elektrischen Anschlüssen (43) versehen ist, die in entsprechende weibliche elektrische Anschlüsse (25) in der anderen der beiden Wechseleinheiten (11) passen, nachdem die genannte Anfangsausrichtung des mindestens einen Ausrichtstiftes (40) mit dem mindestens einen Ausrichtloch (41) stattgefunden hat, daß mindestens einer der elektrischen Anschlüsse federbelastet ist, wobei der männliche elektrische Anschluß (43) positiv in den entsprechenden weiblichen elektrischen Anschluß (25) nach der Anfangsausrichtung eingefügt ist, unter Wirkung der Verschlußmittel, die zu der Paßverbindung gehören, die zwischen der einen und der anderen Wechseleinheit durch die Verschlußmittel (19, 20, 32-35, 54) besteht.

2. Wechselsystem nach Anspruch 1, dadurch gekennzeichnet, daß die Verschlußmittel Verriegelungsmittel mit zusammenwirkenden Teilen aufweisen, von denen der eine Teil in der einen der Wechseleinheiten für eine zusammengesetzte Axial- und Radialbewegung angeordnet ist und der andere Teil in der anderen Wechseleinheit befestigt ist, zum Eingriff mit dem einen der zusammenwirkenden Teile.

3. Wechselsystem nach Anspruch 1, dadurch gekennzeichnet, daß die Verschlußmittel eine Vielzahl von hin- und herbeweglichen Verriegelungsmitteln (20) aufweisen, die durch Antriebsmittel (30, 32) betätigt werden, welche Antriebsmittel einen doppelt wirkenden pneumatischen Zylinder (30) und eine Ausgangsstange (32) aufweisen, und die mit Verriegelungshaltemitteln (54) zusammenwirken, im Ansprechen auf Signale von der zentralen Kontrollquelle, welche hin- und herbeweglichen Verriegelungsmittel hin- und herbewegbar auf einem Joch (33) angeordnet sind, das schwenkbar auf der Kolbenausgangsstange sitzt, um mit den Verriegelungshaltemitteln (54) vor dem vollständigen Zusammenfügen der ersten Wechseleinheit mit der zweiten Wechseleinheit in Eingriff zu treten, welche Verriegelungsmittel zum vollständigen Zusammenfügen der ersten Wechseleinheit mit der zweiten Wechseleinheit die zweite Wechseleinheit in den sicheren vollen Zusammenfügungs-Kontakt mit der ersten Wechseleinheit anheben, wobei die Anordnung derart ist, daß das schwenkbare Anordnen des Joches auf der Kolbenausgangsstange dazu dient, Anhebekräfte auszugleichen, die auf die Verriegelungshaltemittel (54) durch die Verriegelungsmittel (20) während des Zusammenfügens des ersten und zweiten Wechselsystems wirken.

4. Wechselsystem nach einem der vorhergehenden Ansprüche, dadurch gekennzeichnet, daß die männlichen elektrischen Anschlüsse und die entsprechenden weiblichen elektrischen Anschlüsse, von denen mindestens einer federbelastet ist, nach dem Zusammenfügen der ersten und zweiten Wechseleinheit ausgerichtete Längsachsen haben.

5. Wechselsystem nach Anspruch 4, dadurch gekennzeichnet, daß die Antriebsmittel einen doppelt wirkenden pneumatischen Zylinder (30) und eine Ausgangskolbenstange (32) aufweisen.

6. Wechselsystem nach Anspruch 5, dadurch gekennzeichnet, daß die Verriegelungsmittel hin- und herbewegbar auf einem Joch (33) angeordnet sind, das schwenkbar (34) mit der Ausgangskolbenstange verbunden ist, welche schwenkbare Verbindung dazu dient, Hebekräfte zu verteilen, die auf die Verriegelungshaltemittel (54) durch die Verriegelungsmittel (20) während des Zusammenfügens der ersten und zweiten Wechseleinheit ausgeübt werden.

7. In einem Manipulator-Werkzeugwechselsystem mit zusammenpassenden ersten und zweiten Wechseleinheiten, die zusammenpassende Steuersignalleitmittel aufweisen, die in jeder Wechseleinheit angeordnet sind, dadurch gekennzeichnet, daß die Steuersig-nalleitmittel (25, 43) Längsachsen aufweisen, die nach dem Zusammenfügen der Wechseleinheiten (11, 39) ausgerichtet sind, und daß mindestens eines der zusammenpassenden Leitmittel ein axial hin- und herbewegliches federbelastetes elektrisch leitendes Kontaktelement ist.

8. System nach Anspruch 7, dadurch gekennzeichnet, daß zum Ermöglichen eines Werkzeugwechsels die erste Wechseleinheit in Steuersignalverbindung mit einer zentralen Kontrollquelle ist, und daß die zweite Wechseleinheit an einem Bedienungselement befestigbar ist und mit diesem in Steuersignalverbindung steht, welches Bedienungselement einen Werkzeuggreifer und Verschlußmittel (19, 10, 32-35) aufweist, die in Signalverbindung mit der zentralen Kontrollquelle stehen und auf diese ansprechen, um die passenden Wechseleinheiten zu verbinden und zu trennen.

9. Wechselsystem nach Anspruch 8, dadurch gekennzeichnet, daß · die Verschlußmittel eine Vielzahl von hin- und hergehenden Verriegelungsmitteln (20) umfassen, die von Antriebsmitteln (30, 32) angetrieben sind und in Eingriff mit Verriegelungshaltemitteln (54) bringbar sind, welche Antriebsmittel auf Signale (29) von der zentralen Kontrollquelle ansprechen, um auf Befehl die zusammenpassenden Wechseleinheiten zu verbinden und zu trennen.

10. Wechselsystem nach Anspruch 9, dadurch gekennzeichnet, daß die hin- und herbeweglichen Verriegelungsmittel im Ansprechen auf die Antriebsmittel hin- und hergehen, um mit den Verriegelungshaltemitteln (54) in Eingriff zu treten, bevor die erste Wechseleinheit vollständig mit der zweiten Wechseleinheit zusammengefügt ist und um nach weiterem Hin- und Hergehen, die zweite Wechseleinheit anzuheben und vollständig und sicher mit der ersten Wechseleinheit zusammenzufügen.

11. Wechselsystem nach Anspruch 10, dadurch gekennzeichnet, daß die Antriebsmittel einen doppelt wirkenden pneumatischen Zylinder (30) und eine Ausgangskolbenstange (32) aufweisen.

12. Wechselsystem nach Anspruch 11, dadurch gekennzeichnet, daß die Verriegelungsmittel hinun herbeweglich auf einem Joch (33) angeordnet sind, das schwenkbar (34) mit der Ausgangskolbenstange verbunden ist, welche schwenkbare Befestigung dazu dient Anhebekräfte zu verteilen, die auf die Verriegelungshaltemittel (54) durch die Verriegelungsmittel (20) während des Zusammenfügens der ersten und zweiten Wechseleinheiten ausgeübt werden.

## Revendications

1. Système d'échange destiné à connecter un élément de manipulation à distance avec une source de commande centrale et comprenant une première unité d'échange (11) pouvant être fixée sur et être en communication de signaux de commande avec la source de commande centrale, la première unité d'échange étant dotée de moyens de conduite de signaux de commande (25); une seconde unité d'échange (39) pouvant être appariée avec et connectée de façon amovible à la première unité d'échange et pouvant être fixée sur et être en communication de signaux de commande avec l'élément de manipulation à distance (50); des moyens d'alignement comprenant au moins une goupille d'alignement (40) sur l'une des unités d'échange et au moins un trou d'alignement (41) dans l'autre des unités d'échange pour faciliter l'alignement initial des première et seconde unités d'échange; et des moyens de blocage ou verrouillage (1g, 20, 32-35) en communication de signaux avec et sensibles à la source de commande centrale pour connecter et déconnecter les unités d'échange appariables, caractérisé en ce que l'une des unités d'échange (39) est munie de connexions électriques mâles (43) destinées à l'appariement avec des connexions électriques femelles (25) dans l'autre des unités d'échange (11) après avoir obtenu l'alignement initial d'au moins une goupille d'alignement (40) sur au moins un trou d'alignement (41), au moins l'une des connexions électriques étant chargée par ressort, la connexion électrique mâle (43) étant appariée de façon positive avec la connexion électrique femelle correspondante (25) après l'alignement initial sous l'action du moyen de blocage suite à la connexion d'appariement de l'une et l'autre unité d'échange par les moyens de blocage (19, 20, 32-35, 54).

2. Système d'échange selon la revendication 1, caractérisé en ce que le moyen de blocage comprend un verrou comportant des pièces coopérantes, dont l'une est montée dans l'une des unités d'échange pour le mouvement radial et axial combiné et l'autre pièce est fixée dans l'autre unité d'échange pour la coopération avec l'une des parties coopérantes.

3. Système d'échange selon la revendication 1, caractérisé en ce que les moyens de blocage comprennent plusieurs verrous à enclenchement mutuel ou mouvement alternatif (20) actionnés par des moyens d'entraînement (30, 32) comprenant un double vérin pneumatique (30) et un arbre de sortie (32) et pouvant s'engager dans des moyens de retenue de verrou (54) en réponse à des signaux provenant de la source de commande centrale, le verrou à enclenchement mutuel étant monté en mouvement alternatif sur un étrier (33) qui est monté de façon pivotante sur l'arbre de sortie de piston pour s'engager dans le moyen de retenue de verrou (54) avant l'appariement complet de la première unité d'échange avec la seconde unité d'échange, le verrou pour l'appariement complet de la première unité d'échange avec la seconde unité d'échange soulevant la seconde unité d'échange pour la mettre en contact d'appariement complet fiable avec la première unité d'échange, l'agencement étant tel que le montage en pivotement de l'étrier sur l'arbre de sortie de piston sert à équilibrer les forces de levée sur le moyen de retenue de verrou (54) par le verrou (20) pendant l'appariement du premier et du second système d'échange.

4. Système d'échange selon l'une quelconque des revendications précédentes, caractérisé en ce que les connexions électriques mâles et les connexions électriques femelles correspondantes dont au moins l'une d'entre elles est chargée par un ressort présentent des axes longs alignés sur l'appariement des première et seconde unités d'échange.

5. Système d'échange selon la revendication 4, caractérisé en ce que le moyen d'entraînement comprend un vérin pneumatique double (30) et un arbre de sortie de piston (32).

6. Système d'échange selon la revendication 5, caractérisé en ce que les verrous sont montés en mouvement alternatif sur un étrier qui est monté de façon pivotante (34) sur l'arbre de sortie de piston, lequel montage de pivotement sert à équilibrer les forces de levée exercées sur les moyens de retenue de verrou (54) par le verrou (20) pendant l'accouplement des première et seconde unités d'échange.

7. Système d'unité d'échange d'outils de manipulation comprenant des première et seconde unités d'échange appariables, présentant des moyens de conduite de signaux de commande appariables montés dans chaque unité d'échange, caractérisé en ce que les moyens de conduite de signaux de commande (25, 43) présentent des axes longs alignés lors de l'appariement des unités d'échange (11, 39) et en ce qu'au moins l'un des moyens de conduite d'accouplement est un élément de contact de conduite électrique chargé par ressort à mouvement alternatif ou engagement mutuel axialement.

8. Système selon la revendication 7, caractérisé en ce que pour permettre la permutation d'outils la première unité d'échange est en communication de signaux de commande avec une source de commande centrale et la seconde unité d'échange peut être fixée sur et être en communication de signaux de commande avec un élément de manipulation comprenant un organe préhenseur d'outil, et des moyens de blocage (19, 10, 32-35) en communication de signaux avec et sensible à la source de commande centrale pour connecter et déconnecter les unités d'échange pouvant être accouplées.

9. Système d'échange selon la revendication 8, caractérisé en ce que le moyen de blocage comprend plusieurs verrous à enclenchement mutuel ou mouvement alternatif (20) actionnés par des moyens d'entraînement (30, 32) et pouvant s'engager avec des moyens de retenue de verrou (54), le moyen d'entraînement étant sensible aux signaux (29) provenant de la source de commande centrale pour coopérer avec et se désolidariser, sur commande, des unités d'échange appariables.

10. Système d'échange selon la revendication 9, caractérisé en ce que le verrou à enclenchement mutuel est mis en mouvement alternatif en réponse au moyen d'entraînement pour coopérer avec le moyen de retenue de verrou (54) avant l'appariement complet de la première unité d'échange avec la seconde unité d'échange et lors de la reprise du mouvement alternatif, pour soulever la seconde unité d'échange en contact d'appariement complet fiable avec la première unité d'échange.

11. Système d'échange selon la revendication 10, caractérisé en ce que le moyen d'entraînement comprend un cylindre pneumatique double (30) et un arbre de sortie de piston (32).

12. Système d'échange selon la revendication 11, caractérisé en ce que les verrous sont montés en enclenchement mutuel ou mouvement alternatif sur un étrier (33) qui est monté de façon pivotante (34) sur l'arbre de sortie de piston, lequel montage en pivotement sert à équilibrer les forces de levée exercées sur les moyens de retenue de verrou (54) par le verrou (20) pendant l'appariement des première et seconde unités d'échange.

EP 0 154 227 B1

FIG.1

FIG.2

FIG.3

FIG.5

FIG.4

FIG.6

FIG.7